# EUROPÄISCHE PATENTSCHRIFT

(11) **EP 4 085 762 B1**
(45) Veröffentlichungstag und Bekanntmachung des Hinweises auf die Patenterteilung: **22.04.2026**
(21) Anmeldenummer: 21172717.7
(22) Anmeldetag: 07.05.2021
(51) Int. Cl.: A01K 47/00, A01K 47/06

(54) **BIENENSTOCK UND VERFAHREN ZUM HERSTELLEN EINES BIENENSTOCKS**
BEEHIVE AND METHOD FOR PRODUCING SAME
RUCHE ET PROCÉDÉ DE FABRICATION D'UNE RUCHE

(43) Veröffentlichungstag der Anmeldung: 09.11.2022
(73) Patentinhaber: HIIVE GmbH, 14513 Teltow (DE)
(72) Erfinder: Potthast, Philip, 10435 Berlin (DE)
(74) Vertreter: Bittner, Thomas L.

(56) Entgegenhaltungen:
- DE-A1- 102006 052 561
- DE-A1- 102013 225 268
- DE-C- 825 022
- DE-C- 870 614
- FR-A- 959 463

## Beschreibung

Die Erfindung betrifft einen Bienenstock sowie ein Verfahren zum Herstellen eines Bienenstocks.

### Hintergrund

Bei der Haltung von Honigbienen ist es problematisch, dass gerade in den Wintermonaten eine erhöhte Sterblichkeit von Bienen bis hin zu ganzen Völkern auftritt. Auch Parasiten und Krankheiten können Bienenvölker schädigen. Um diesen Problemen zu begegnen werden Bienenvölker zunehmend mit Chemikalien und Medikamenten behandelt.

Freilebende Honigbienen nisten bevorzugt in Baumhöhlen. Solche Baumhöhlen bieten eine gute Wärmeisolierung, wodurch die Bienen im Winter gegen Kälte, im Sommer gegen übermäßige Hitze geschützt sind. Weiterhin absorbiert Holz Feuchtigkeit, so dass in Baumhöhlen ein für die Biene sowie Nützlinge förderliches Mikroklima entsteht.

Für die Haltung von Honigbienen durch den Menschen sind rechteckige Kisten, sogenannte Magazinbeuten, verbreitet. Diese Magazinbeuten erlauben einen leichten Zugang zu den Bienen und insbesondere eine erleichterte Honigernte, entsprechen aber nicht dem natürlichen Lebensraum von Honigbienen.

Bei einer traditionellen Methode gemäß dem sogenannten Zeidler-Handwerk werden Bienen in handwerklich bearbeiteten Baumstämmen gehalten, welche dem natürlichen Habitat der Bienen ähnlicher sind. Allerdings ist diese Art der Bienenwohnung sehr unökonomisch und impraktikabel, insbesondere durch einen erschwerten Zugang zu den Bienen und dem Honig.

Das Dokument FR 959 463 A beschreibt einen Bienenstock, bei dem eine innere Schicht aus einem künstlichen oder natürlichen Zellulosematerial, wie Holz, wenigstens einer Schicht aus einem gezwungen wärmedämmenden und kompakten Material, um dem Eindringen von Parasiten entgegenzuwirken, und einer wasserabweisenden und starren äußeren Schicht übereinandergelegt werden. Zwischen den Schichten können dünne Metallblätter angeordnet sein. Die Wände werden in den Ecken verbunden, um einen rechteckigen oder quadratischen Bienenstock-Körper zu bilden.

### Zusammenfassung

Aufgabe der Erfindung ist es, verbesserte Technologien für Bienenstöcke bereitzustellen, welche die Probleme bekannter Haltungsmethoden für Bienenvölker überwinden und bei denen insbesondere Lebensbedingungen für die Haltung von Honigbienen und ein Zugang zu Bienen und Honig optimiert sind.

Zur Lösung der Aufgabe ist ein Bienenstock nach dem unabhängigen Anspruch 1 geschaffen.

Weiterhin ist ein Verfahren zum Herstellen eines Bienenstocks, gemäß unabhängigem Anspruch 14, bereitgestellt. Vorteilhafte Ausgestaltungen sind Gegenstand von abhängigen Ansprüchen.

Nach einem Aspekt ist ein Bienenstock mit einem Innenaufbau, einer Stützvorrichtung und einer Isolierungsvorrichtung bereitgestellt. Der Innenaufbau mit einem innenliegenden Hohlraum gebildet, der eingerichtet ist, von einem Bienenvolk bezogen und mit einem Wabenwerk ausgebaut zu werden. Der Innenaufbau ist in der Stützvorrichtung aufgenommen. Die Isolierungsvorrichtung ist an der Stützvorrichtung aufgenommen und weist einen Schichtaufbau auf. Der Schichtaufbau weist eine mit einem dampfdiffusionshemmenden Material gebildete Dampfbremsen-Schicht, welche den Innenaufbau umgebend an der Stützvorrichtung angeordnet ist, eine mit einem wärmedämmenden Material gebildete Dämmschicht, welche die Dampfbremsen-Schicht umgebend an der Stützvorrichtung angeordnet ist, und eine mit einem diffusionsoffenen Material gebildete Wetterschutzschicht auf, welche die Dämmschicht umgebend an der Stützvorrichtung angeordnet ist.

Nach einem weiteren Aspekt ist ein Verfahren zum Herstellen eines Bienenstocks geschaffen. Das Verfahren umfasst das Bereitstellen eines Innenaufbaus mit einem innenliegenden Hohlraum, welcher eingerichtet ist, von einem Bienenvolk bezogen und mit einem Wabenwerk ausgebaut zu werden, das Aufnehmen des Innenaufbaus in einer Stützvorrichtung und das Aufnehmen einer Isoliervorrichtung mit einer Schichtanordnung an der Stützvorrichtung. Das Aufnehmen der Isoliervorrichtung umfasst das Umgeben des Innenaufbaus mit einer mit einem dampfdiffusionshemmenden Material gebildete Dampfbremsen-Schicht der Schichtanordnung, welche an der Stützvorrichtung angeordnet wird, das Umgeben der Dampfbremsen-Schicht mit einer mit einem wärmedämmenden Material gebildete Dämmschicht, welche an der Stützvorrichtung angeordnet wird, und das Umgeben der Dämmschicht mit einer mit einem diffusionsoffenen Material gebildeten Wetterschutzschicht, welche an der Stützvorrichtung (2) angeordnet wird.

Ein dampfdiffusionshemmendes Material ist insbesondere ein Material, welches geeignet ist, als flächig zusammenhängende Schicht mit einem Wasserdampfdiffusionswiderstand angeordnet zu werden, welche die Diffusion von dampfförmigem Wasser aus Luft in dem innenliegenden Hohlraum in den Schichtaufbau vermindert. Zusätzlich kann das dampfdiffusionshemmende Material geeignet sein, den Durchtritt von flüssigem Wasser verhindern oder verlangsamen. Insbesondere kann hierdurch mit der Dampfbremsen-Schicht verhindert sein, dass sich in dem Schichtaufbau Kondenswasser bildet, welches bei unzureichender Abtrocknung zu Feuchteschäden, insbesondere Schimmelbefall, des Bienenstocks führt.

Das dampfdiffusionshemmende Material kann eine Wasserdampfdiffusionswiderstandszahl µ aufweisen, welche zusammen mit einer Stärke s der Dampfbremsen-Schicht eine wasserdampfdiffusionsäquivalente Luftschichtdicke s_{d} gemäß DIN EN ISO 12572 ergibt, welche größer als 0,5 m ist. Hierbei gibt die Wasserdampfdiffusionswiderstandszahl oder der Dampfsperrwert als dimensionsloser Materialkennwert an, um welchen Faktor das dampfdiffusionshemmende Material gegenüber Wasserdampf dichter ist, als eine gleich dicke, ruhende Luftschicht. Die Dampfbremsen-Schicht kann diffusionsbremsend, diffusionshemmend, diffusionssperrend oder diffusionsdicht gemäß DIN 4108-3 sein. Insbesondere kann die Dampfbremsen-Schicht eine wasserdampfdiffusionsäquivalente Luftschichtdicke s_{d} von mehr als 0,25 m, von mehr als 0,5 m bis 10 m, von mehr als 10 m bis 100 m, von mehr als 100 m bis 1500 m oder von mehr als 1500 m aufweisen. Bevorzugt ist die Dampfbremsen-Schicht diffusionsbremsend oder diffusionshemmend und weist eine wasserdampfdiffusionsäquivalente Luftschichtdicke s_{d} von mehr als 0,5 m bis 100 m auf.

Die Dampfbremsen-Schicht kann eine Dampfbremsfolie sein. Die Dampfbremsfolie kann insbesondere eine Kunststoff-Folie sein. Zum Beispiel kann die Dampfbremsen-Schicht eine Folie aus Polypropylen, Polyethylen-Copolymer und / oder Polypropylen-Gelege sein.

Das wärmedämmende Material ist ein Material, welches geeignet ist, ein Auskühlen des innenliegenden Hohlraums dadurch zu verhindern, dass es eine so geringe Wärmeleitfähigkeit aufweist, dass der Wärmedurchgangskoeffizient der Dämmschicht im Vergleich zu der Dampfbremsen-Schicht und dem Innenaufbau für das Verhindern eines Auskühlens ausreichend verringert ist. Insbesondere kann der Wärmedurchgangskoeffizient der Dämmschicht geringer sein als der Wärmedurchgangskoeffizient einer Holzschicht mit einer Dicke im Bereich von 1,5 mm, bevorzugt geringer als der Wärmedurchgangskoeffizient einer Holzschicht mit einer Dicke im Bereich von 15 mm.

Das wärmedämmenden Material kann feuchtigkeitsdurchlässig sein, also insbesondere für flüssiges Wasser durchlässig sein. Hiermit kann ein Abtrocknen des wärmedämmenden Materials erleichtert sein.

Das wärmedämmende Material kann Hanfwolle aufweisen. Insbesondere kann die Dämmschicht eine Schicht aus Hanfwolle sein. Alternativ oder zusätzlich kann das wärmedämmende Material Tierwolle, insbesondere Schafswolle, Bauschaum, Faserabfall und / oder andere für die Wärmedämmung geeignete Stoffe aufweisen. Das wärmedämmende Material kann als loses Material und / oder in Form einer Matte bereitgestellt sein.

Der Schichtaufbau weist eine mit einem diffusionsoffenen Material gebildete Wetterschutzschicht auf, welche die Dämmschicht umgebend an der Stützvorrichtung angeordnet ist. Insbesondere kann das diffusionsoffene Material der Wetterschutzschicht undurchlässig für flüssiges Wasser sein und hierdurch ein Eindringen von Wasser, beispielsweise in Form von Niederschlägen, in die Dämmschicht verhindern. Beispielsweise kann die Wetterschutzschicht nach DIN EN ISO 811 wasserdicht bis 2.500 mm Wassersäule sein, bevorzugt eine Wasserdichtigkeit größer als 2.500 mm Wassersäule aufweisen, beispielsweise bis 10.000 mm Wassersäule.

Hierbei kann durch das diffusionsoffene Material ein Trocknen der Dämmschicht ermöglicht sein, indem (beispielsweise durch die Dampfbremsen-Schicht) in die Dämmschicht eingedrungene Feuchtigkeit verdampft und durch die Wetterschutzschicht aus dem Schichtaufbau nach außen diffundiert. Durch das diffusionsoffene Material ist die Wetterschutzschicht dampfoffen. Die Wetterschutzschicht kann im Sinn der DIN 4108-3 diffusionsoffen sein. Insbesondere kann die Wetterschutzschicht eine wasserdampfdiffusionsäquivalente Luftschichtdicke s_{d} von weniger als 0,5 m, beispielsweise 0,05 m aufweisen.

In einer bevorzugten Ausführung kann das diffusionsoffene Material der Wetterschutzschicht winddicht sein.

Das diffusionsoffene Material kann ein Folienmaterial sein. Die Wetterschutzschicht kann insbesondere mit einer Kunststoff-Folie gebildet sein. Zum Beispiel kann die Wetterschutzschicht eine Folie aus Polypropylen, Polyethylen-Copolymer und / oder Polypropylen-Gelege umfassen. In einer beispielhaften Ausgestaltung kann das diffusionsoffene Material eine Dampfdiffusionswiderstandszahl µ nach DIN EN ISO 12572 von 80 aufweisen. Das diffusionsoffene Material kann gegenüber ultravioletter (UV-) Strahlung widerstandsfähig sein. Insbesondere kann das diffusionsoffene Material eine Folie umfassen, welche einen Test für Dauerhaftigkeit nach künstlicher Alterung gemäß DIN EN 1297 / DIN EN 1296 bestanden hat und / oder einer Freibewitterung von 6 Monaten standhält.

Die Dämmschicht kann zwischen der mit einer Dampfbremsfolie gebildeten Dampfbremsen-Schicht und der mit einem Folienmaterial gebildeten Wetterschutzschicht eingeschweißt sein.

Hierbei und in alternativen Ausführungen können die Schichten des Schichtaufbaus als vollständig ausgebildeter Schichtaufbau gemeinsam an der Stützvorrichtung angeordnet sein.

Der Bienenstock kann eine den Schichtaufbau umgebende Stoffhülle aufweisen. Insbesondere kann die Stoffhülle über den Bienenstock gespannt oder gehängt sein, um einen zusätzlichen Schutz vor Witterungseinflüssen bereitzustellen. Beispielsweise kann die Stoffhülle ausgebildet sein, den Bienenstock gegen Wasser und / oder Wind abzuschirmen, insbesondere wasser- und / oder winddicht sein. Insbesondere kann die Stoffhülle mit einem gegen UV-Licht beständigem Material gebildet sein und / oder ausgebildet sein, UV-Licht von dem Schichtaufbau fernzuhalten. Die Stoffhülle kann mit einem Gewebe aus Natur- und / oder Kunstfasern gebildet sein. Beispielsweise kann die Stoffhülle mit Polypropylen-Mikrofaser gebildet sein. Die Stoffhülle kann eine Membran aufweisen, beispielsweise aus monolithischem thermoplastischem Elastomer wie thermoplastischem Polyesterelastomer (TPE / TEEE). Die Stoffhülle kann alternativ oder zusätzlich eine Imprägnierung aufweisen.

Der Innenaufbau des Bienenstocks kann eine Zugangsöffnung aufweisen, welche einen Zugang zu dem Hohlraum für Bienen bildet. Hierbei kann die Dampfbremsen-Schicht den Innenaufbau mit Ausnahme des Zugangs luftdicht umgebend an der Stützvorrichtung angeordnet sein. Hierdurch kann ein Luftaustausch zwischen dem innenliegenden Hohlraum und der Umgebung des Bienenstocks beschränkt sein auf einen durch die Dampfbremsen-Schicht und die Zugangsöffnung ermöglichten Luftaustausch. Insbesondere kann hierdurch eine Wirkung des Schichtaufbaus insofern verbessert sein, dass die klimatischen Bedingungen in dem innenliegenden Hohlraum annähernd vollständig durch den Schichtaufbau im Zusammenwirken mit dem Verhalten eines in dem Bienenstock befindlichen Bienenvolks bestimmt sind. Ein luftdichtes Umgeben des Innenaufbaus durch die Dampfbremsen-Schicht kann fertigungsbedingt stellenweise, beispielsweise an Übergängen zwischen Einzelkomponenten der Dampfbremsen-Schicht, unvollständig sein, wobei die Dampfbremsen-Schicht den Innenaufbau mit Ausnahme des Zugangs im Sinne der Offenbarung luftdicht umgebend an der Stützvorrichtung angeordnet ist, wenn ein Einfluss eines unvollständigen luftdichten Umgebens auf die klimatischen Bedingungen in dem innenliegenden Hohlraum vernachlässigbar ist. In alternativen Ausgestaltungen kann die Zugangsöffnung unabhängig von einem luftdichten Umgeben des Innenaufbau durch die Dampfbremsen-Schicht vorgesehen sein.

Der Bienenstock kann aufrecht ausgerichtet sein und die Zugangsöffnung kann an einer Unterseite des Bienenstocks angeordnet sein. Bei der Unterseite handelt es sich insbesondere um eine Seite des Bienenstocks, welche bei Verwendung des Bienenstocks unten angeordnet ist. Die Zugangsöffnung kann eine Geometrie aufweisen, welche einen Durchgang für Bienen ermöglicht, für größere Tiere jedoch unpassierbar ist. Die Zugangsöffnung kann verschließbar sein.

An der Zugangsöffnung kann ein Flugbrett angeordnet sein, welches sich von der Zugangsöffnung und dem Bienenstock weg erstreckt und eingerichtet ist, ein Landen von Bienen auf dem Flugbrett und anschließendes Krabbeln durch die Zugangsöffnung sowie ein Abfliegen von Bienen von dem Flugbrett nach dem Krabbeln durch die Zugangsöffnung zu ermöglichen.

Die Stützvorrichtung Halteelemente kann aufweisen, mit denen eine Verbindung zwischen der Stützvorrichtung und dem Schichtaufbau herstellbar ist. Die Halteelemente können Klebeflächen, Klemmverbinder, Steckverbinder, Clips, Stangen oder eine Kombination hiervon aufweisen.

Es können unterschiedliche Halteelemente vorgesehen sein, welche jeweils eingerichtet sind, eine der Schichten des Schichtaufbaus an der Stützvorrichtung zu halten. Beispielsweise können Klebeflächen vorgesehen sein, an denen die Dampfbremsen-Schicht mit der Stützvorrichtung verklebt werden. Alternativ oder zusätzlich kann vorgesehen sein, die Dampfbremsen-Schicht mit Halteelementen an der Stützvorrichtung zu halten, welche als Klemmelemente ausgestaltet sind. Die Dämmschicht kann um die Dampfbremsen-Schicht gelegt und mit klemmend wirkenden Halteelementen an der Stützvorrichtung gehalten werden, beispielsweise mit stangenförmigen Elementen der Stützvorrichtung. Hierbei können die stangenförmigen Elemente gleichzeitig strukturgebende Elemente der Stützvorrichtung sein. Für die Wetterschutzschicht können beispielsweise als Klebeflächen und / oder Klemmelemente ausgebildete Halteelemente vorgesehen sein, welche jeweils oder gemeinsam eingerichtet sind, die Wetterschutzschicht die Dämmschicht umgebend an der Stützvorrichtung zu halten.

Die Dampfbremsen-Schicht, die Dämmschicht und gegebenenfalls die Wetterschutzschicht können mit gemeinsamen Halteelementen an der Stützvorrichtung aufgenommen sein. Insbesondere kann in Ausgestaltungen, in denen die Dämmschicht zwischen der mit einer Dampfbremsfolie gebildeten Dampfbremsen-Schicht und der mit einem Folienmaterial gebildeten Wetterschutzschicht eingeschweißt ist, der Schichtaufbau insgesamt an als Klebeflächen ausgebildeten Halteelementen angeklebt und / oder durch als Klemmelemente gebildete Haltelemente an der Stützvorrichtung gehalten sein.

Mit der Offenbarung ist ein Innenaufbau für einen Bienenstock bereitgestellt, der einen ersten Abschnitt, mit einem innenliegenden ersten Hohlraum und einer ersten Abschnittsöffnung, welche einen Zugang zu dem ersten Hohlraum bildet, und einen zweiten Abschnitt mit einem innenliegenden zweiten Hohlraum, einer zweiten Abschnittsöffnung und einer Zugangsöffnung aufweist, welche einen Zugang für Bienen zu dem Hohlraum des Innenaufbaus bildet. Hierbei ist der zweite Abschnitt trennbar luftdicht mit dem ersten Abschnitt derart verbunden, dass die erste Abschnittsöffnung und die zweite Abschnittsöffnung zumindest teilweise deckungsgleich sind, wodurch ein Zugang aus dem zweiten Hohlraum zu dem ersten Hohlraum durch die zweite Abschnittsöffnung und die erste Abschnittsöffnung gebildet ist, und der erste Hohlraum und der zweite Hohlraum einen innenliegenden Hohlraum bilden, welcher eingerichtet ist, von einem Bienenvolk bezogen und mit einem Wabenwerk im Wildbau ausgebaut zu werden. Hierbei weist der Innenaufbau weiterhin Folgendes eine Abschnitt-Trenneinrichtung und eine Bienen-Trenneinrichtung auf, wobei die Abschnitt-Trenneinrichtung an einem Übergang zwischen dem ersten Abschnitt und dem zweiten Abschnitt angeordnet und eingerichtet ist, an dem Übergang zwischen dem ersten Abschnitt und dem zweiten Abschnitt eine Schwachstelle in einem in dem innenliegenden Hohlraum zu bildenden Wabenwerk auszubilden, und wobei die Bienen-Trenneinrichtung mit einer oder mehreren Durchtrittsöffnungen gebildet ist, welche im Bereich der ersten Abschnittsöffnung und der zweiten Abschnittsöffnung derart angeordnet ist, dass ein Übergang für Bienen zwischen dem zweiten Abschnitt und dem ersten Abschnitt nur durch die eine oder mehreren Durchtrittsöffnungen ermöglicht ist, wobei die Größe der einen oder mehreren Durchtrittsöffnungen derart gewählt ist, dass Arbeiterinnen-Bienen die eine oder mehreren Durchtrittsöffnungen passieren können und Bienenköniginnen die eine oder mehreren Durchtrittsöffnungen nicht passieren können. Der offenbarungsgemäße Innenaufbau kann als Innenaufbau für den offenbarungsgemäßen Bienenstock mit dem Schichtaufbau vorgesehen sein. Alternativ kann der Innenaufbau unabhängig von einem Schichtaufbau für einen Bienenstock vorgesehen sein.

Die Bienen-Trenneinrichtung kann entfernbar und / oder deaktivierbar sein. Insbesondere kann vorgesehen sein, die Bienen-Trenneinrichtung saisonabhängig vorzusehen oder nicht vorzusehen bzw. zu aktiveren oder zu deaktivieren, um einen Zugang einer Bienenkönigin zu dem ersten Abschnitt zu ermöglichen oder zu verhindern.

Die Schwachstelle an dem Übergang zwischen dem ersten und dem zweiten Abschnitt wird mittels der Abschnitt-Trenneinrichtung derart ausgebildet, dass bei einer Trennung des ersten Abschnitts von dem zweiten Abschnitts ein von Bienen in dem innenliegenden Hohlraum errichtetes Wabenwerk an dem Übergang im Übrigen zerstörungsfrei aufgetrennt wird. Es wird also das Wabenwerk an der Schwachstelle aufgetrennt, beispielsweise aufgebrochen, wobei mit der Schwachstelle sichergestellt ist, dass das Wabenwerk abgesehen von der Teilung nicht weitergehend zerstört wird, insbesondere nicht zerbricht.

Insbesondere kann die Abschnitt-Trenneinrichtung mit in einer Streugut-Halteeinrichtung angeordnetem Streugut gebildet sein. Hierdurch ist einer oder beide von jeweiligen in dem ersten Hohlraum und dem zweiten Hohlraum gebildete Abschnitten eines von Bienen errichteten Wabenwerks mit einzelnen Elementen des Streuguts verbunden und eventuelle Verbindungen der Abschnitte des Wabenwerks durch das Streugut hindurch lediglich punktuell. Bei Trennung des ersten Abschnitts von dem zweiten Abschnitt stehen die miteinander nicht verbundenen Elemente des Streuguts einer Trennung nicht entgegen. Mit einem jeweiligen Abschnitt des Wabenwerks verbundene Elemente des Streuguts werden mit dem betreffenden Abschnitt des Wabenwerks gemeinsam von der Streugut-Halteeinrichtung abgehoben. Eventuelle punktuelle Verbindungen zwischen den Abschnitten des Wabenwerks brechen hierbei auf, wobei aufgrund der geringen Ausmaße solcher eventuellen punktuellen Verbindungen eine beim Bruch der Verbindungen wirkende Kraft gering ist und somit keine weitergehende Zerstörung an dem Wabenwerk verursacht.

Das Streugut kann Rindenmulch sein. Alternativ kann ein anderes Streugut oder eine Kombination von verschiedenen Arten von Streugut vorgesehen sein, vorzugsweise ein natürliches Streugut oder eine Kombination verschiedener Arten von natürlichem Streugut.

Der erste Abschnitt kann domförmig ausgebildet sein, der zweite Abschnitt kann röhrenförmig ausgebildet sein und der erste Abschnitt kann über dem zweiten Abschnitt angeordnet sein, also insbesondere bei einer Verwendung eines Bienenstocks, in welchem der Innenaufbau angeordnet ist, über dem ersten Abschnitt angeordnet sein. Bei der röhrenförmigen Ausgestaltung des zweiten Abschnitts kann ein röhrenförmiger Hauptkörper des zweiten Abschnitts an seinem oberen Ende mit dem domförmigen ersten Abschnitt verbunden sein und an dem unteren Ende mit einem im Wesentlichen scheibenförmigen Verschlusselement verschlossen sein, in welchem die Zugangsöffnung gebildet ist. In diesem Zusammenhang kann vorgesehen sein, dass die Zugangsöffnung des Innenaufbaus die gesamte Unterseite des zweiten Abschnitts umfasst, welche nicht luftdicht von der Dampfbremsen-Schicht umgeben ist, während der Innenaufbau im Übrigen luftdicht von der Dampfbremsen-Schicht umgeben ist. Hierbei kann das Verschlusselement die Zugangsöffnung des Innenaufbaus nicht-luftdicht verschließen und die in dem Verschlusselement gebildete Zugangsöffnung kann eine Zugangsöffnung zu dem Bienenstock durch die Zugangsöffnung des Innenaufbaus bilden.

Mit dem innenliegenden ersten Hohlraum kann Honigraum gebildet sein und mit dem innenliegenden zweiten Hohlraum kann ein Brutraum gebildet sein. In einer beispielhaften Ausgestaltung kann der innenliegende erste Hohlraum ein Volumen von sechs bis zehn Litern aufweisen und der innenliegende zweite Hohlraum kann ein Volumen von 36 bis 40 Litern aufweisen.

Der Innenaufbau kann mit wenigstens einem der folgenden Materialien gebildet sein: Lehm und Holz. In einer beispielhaften Ausgestaltung ist der zweite Abschnitt mit einem röhrenförmigen Aufbau umfassend eine oder mehrere Holzplatten bereitgestellt. Die eine oder mehrere Holzplatten können im Vergleich zu ihrer Fläche dünn sein. Die eine oder mehrere Holzplatten können eine Dicke im Bereich von 0,5 mm bis 5 mm aufweisen, bevorzugt eine Dicke im Bereich von 1 mm bis 3 mm, beispielsweise 1,5 mm. Die eine oder mehreren Holzplatten können in einem Gerüst angeordnet sein. Hierbei können die eine oder mehreren Holzplatten an dem Gerüst mittels Halteeinrichtungen gehalten werden, wobei die eine oder mehreren Holzplatten bei der Verbindung mit dem Gerüst in eine Röhrenform gebracht werden können. Für die Halteeinrichtungen des Gerüsts können die Ausgestaltungen gemäß den Ausführungen zu den Halteeinrichtungen der Stützvorrichtung entsprechend vorgesehen sein.

Die Holzplatte oder wenigstens eine der mehreren Holzplatten kann entfernbar sein, um einen Zugang zu dem zweiten Innenraum zu ermöglichen, während der Innenaufbau von einem Bienenvolk bewohnt wird. Hierzu kann die entfernbare Holzplatte mittels eine lösbaren und wiederverbindbaren Halteelements an dem Innenaufbau, insbesondere einem Gerüst des Innenaufbaus, gehalten sein, beispielsweise mittels einer Klemmverbindung, einer Clip-Verbindung oder einer Schraubverbindung. Hiermit ermöglicht sein, Proben aus dem Bienenstock zu nehmen, beispielsweise für eine Überprüfung durch das zuständige Veterinäramt.

Der erste Abschnitt kann als Lehmkuppel gebildet sein. Hierbei kann der erste Abschnitt ein Lehmgerüst aufweisen, welches eine Grundform des ersten Abschnitts vorgibt und mit einem andere Material als Lehm, beispielsweise einem Kunststoff, gebildet sein kann. Auf das Lehmgerüst, insbesondere in Zwischenräume und / oder auf Oberflächen des Lehmgerüsts, kann dann Lehm aufgebracht werden, um die Lehmkuppel auszubilden.

Die Stützvorrichtung kann aus einzelnen miteinander verbindbaren Teilen aufgebaut sein. Beispielsweise kann die Stützvorrichtung Kunststoff-Spritzgussteile umfassen, welche miteinander verbunden werden. Elemente der Stützvorrichtung können lösbar miteinander verbunden sein, beispielsweise mittels eines oder mehrerer Clip-Mechanismen. Alternativ oder zusätzlich kann eine lösbare Verbindung mit Klemm- oder Schraubmechanismen vorgesehen sein.

Die Stützvorrichtung kann teilbar sein, insbesondere in Ausgestaltungen mit einem teilbaren Innenaufbau. Hierbei kann die Stützvorrichtung insbesondere im Bereich der Verbindung des ersten Abschnitts und des zweiten Abschnitts des Innenaufbaus trennbar sein. Eine Trennbarkeit kann dadurch erreicht sein, dass die Stützvorrichtung mit ringförmigen Verbindungssegmenten gebildet ist, welche in verbundenem Zustands aufeinander aufliegen und mittels eines Dichtemechanismus, beispielsweise eines Dichtrings, eine luftdichte Verbindung bereitstellen. Die ringförmigen Verbindungssegmente können hierbei mittels eines Clip-Mechanismus, eines Klemmmechanismus und / oder eines Schraubmechanismus miteinander verbunden sein.

Durch einen an einer Trennstelle luftdichten trennbaren Aufbau der Stützvorrichtung kann die luftdichte Verbindung des ersten Abschnitts und des zweiten Abschnitts des Innenaufbaus bereitgestellt sein. Insbesondere können der erste Abschnitt und der zweite Abschnitt jeweils an einem ringförmigen Verbindungssegment der Stützvorrichtung angeordnet sein, welche in verbundenem Zustand luftdicht miteinander verbunden sind. Die Abschnitt-Trenneinrichtung des Innenaufbaus kann an einem oder mehreren Verbindungssegmenten der Stützvorrichtung gebildet sein.

Der Schichtaufbau kann mit der Stützvorrichtung trennbar ausgestaltet sein. Beispielsweise kann die Dampfbremsen-Schicht in mehrere Abschnitte geteilt sein, die jeweils mit Elementen der Stützvorrichtung luftdicht verbunden sind, derart, dass an der Trennstelle der Stützvorrichtung eine luftdichte Verbindung der Stützvorrichtung gleichzeitig eine Luftdichtigkeit der Dampfbremsen-Schicht insgesamt bereitstellt. Die Dämmschicht und / oder die Wetterschutzschicht können entsprechend mit mehreren Abschnitten bereitgestellt sein, um einen Teilbarkeit des Bienenstocks zu ermöglichen.

Die Dampfbremsen-Schicht und / oder die Wetterschutzschicht können mit einer wiederverschließbaren Öffnung gebildet sein. Insbesondere kann eine jeweilige Folie der Dampfbremsen-Schicht und / oder der Wetterschutzschicht mit einer wiederverschließbaren Öffnung gebildet sein. Eine insbesondere flüssigkeitsdicht wiederverschließbare Öffnung kann mit einem Feder-Nut-Mechanismus gebildet sein, welcher beispielsweise für wiederverschließbare Haushalts-Plastikbeutel als solches bekannt ist. Hierbei kann die wiederverschließbare Öffnung im Bereich einer Trennstelle der teilbaren Stützvorrichtung gebildet sein oder unabhängig von einer Trennbarkeit der Stützvorrichtung vorgesehen sein, um einen Zugang durch den Schichtaufbau zu dem Innenaufbau zu ermöglichen, insbesondere während der Innenaufbau von einem Bienenvolk bewohnt wird.

Mit einer trennbaren Ausgestaltung der Stützvorrichtung und des Schichtaufbaus kann insbesondere ein Entnehmen des Innenaufbaus ermöglicht sein. Bei der Herstellung des Bienenstocks kann eine trennbare Ausgestaltung der Stützvorrichtung und gegebenenfalls des Schichtaufbaus das Einbringen des Innenaufbaus vor der Verbindung der Stützvorrichtung und gegebenenfalls des Schichtaufbaus ermöglichen. Hierbei kann der Innenaufbau insgesamt oder getrennt in einen ersten Abschnitt und einen zweiten Abschnitt aus der Stützvorrichtung entnommen bzw. in diese eingebracht werden.

Der Bienenstock kann eingerichtet sein, an seiner Unterseite an einer pfahlförmigen Stützstruktur angeordnet zu werden, beispielsweise einem Pfahl mit rundem oder rechteckigem Querschnitt, beispielsweise aus Holz. Insbesondere kann der Bienenstock an der Unterseite eine Aufnahme aufweisen, welche eingerichtet ist einen oberen Endabschnitt einer pfahlförmigen Stutzstruktur aufzunehmen und den Bienenstock auf dieser abzustützen. Der Bienenstock kann somit dadurch aufgestellt und für den Gebrauch, insbesondere den Einzug eines Bienenvolks hergerichtet werden, dass der Bienenstock mit der Aufnahme auf einen in den Boden eingebrachten Pfahl aufgesteckt wird. Hierdurch kann der Bienenstock insbesondere eingerichtet zu sein, auch auf unebenem Grund eingesetzt zu werden, ohne dass eine Einebnung des Untergrunds erfolgen muss. Mehrere offenbarungsgemäße Bienenstöcke können so durch den Einsatz mehrerer pfahlförmigen Stützstrukturen unterschiedlicher Länge in unterschiedlichen Höhen angeordnet werden. Es können zusätzliche Sicherungsmittel vorgesehen sein, um den Bienenstock an der pfahlförmigen Stützstruktur zu sichern, zum Beispiel Schrauben.

Der Bienenstock kann eine oder mehrere Sensoraufnahmen aufweisen, wobei eine Sensoraufnahme jeweils eingerichtet ist, einen oder mehrere Sensoren für die Überwachung des Bienenstocks aufzunehmen. Beispielsweise können Sensoren für die Messung von Luftfeuchtigkeit oder Gewicht vorgesehen und in Sensoraufnahmen des Bienenstocks so angeordnet sein, dass von den Sensoren empfangene Messwerte für eine Beurteilung der Qualität des Lebensraums für ein Bienenvolk ermöglichen. Beispielsweise geben die Temperatur und Luftfeuchtigkeit in dem innenliegenden Hohlraum die Umgebungsbedingungen für darin befindliche Bienen an. Aus einer Gewichtsveränderung kann auf Größe und / oder Bautätigkeit eines Bienenvolks geschlossen werden. Eine Feuchtigkeitsmessung in der Dämmschicht kann eine Risikoeinschätzung für Schimmelbildung ermöglichen. Es können Sensoren für das Erfassen von Schallsignalen vorgesehen sein, wobei anhand erfasster Schallsignale ein Rückschluss auf ein Stressniveau eines in dem Bienenstock lebenden Bienenvolkes ermöglicht sein kann. Alternativ oder zusätzlich können ein oder mehrere Kamerasensoren für eine Beobachtung des Bienenvolkes vorgesehen sein. Der Bienenstock kann ein in einer Sensoraufnahme angeordnetes Sensorarray aufweisen, welches unterschiedliche Sensoren für die Überwachung des Bienenstocks aufweist. Beispielsweise können Feuchtigkeits-, Temperatur-, (Atmosphären-)Druck-, akustische, optische, Bewegungs-, Gewichts- bzw. Kraft- und/oder Kamera-Sensoren vorgesehen sein. Es können zusätzliche Sensorarrays mit gleichartigen und / oder unterschiedlichen Sensoren vorgesehen sein, welche in einer jeweiligen Sensoraufnahme angeordnet sind.

Der Bienenstock kann eine Substrataufnahme aufweisen, in welcher ein Substrat als Lebensraum für Symbionten von Bienen angeordnet ist. Beispielsweise kann als Substrat Rindenmulch bereitgestellt sein, welches als Lebensraum für Bücherskorpione dient. Die Substrataufnahme kann einer Unterseite des Bienenstocks angeordnet sein, insbesondere im Bereich einer Zugangsöffnung. In einer Ausgestaltung kann die Substrataufnahme eine Unterseite des Innenaufbaus verschließend an diesem angeordnet sein und eine Öffnung nach außen aufweisen, welche als Zugangsöffnung für Bienen dient.

Die Ausgestaltungen gemäß den vorangehenden Ausführungen zu dem Bienenstock können im Zusammenhang mit dem Verfahren zum Herstellen eines Bienenstocks entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines einen Bienenstocks im Querschnitt;
- Fig. 2: eine schematische Darstellung einer Stützvorrichtung mit einem darin aufgenommenen Innenaufbau in einer Seitenansicht;
- Fig. 3: eine Schnittansicht der Seitenansicht gemäß der Fig. 2;
- Fig. 4: eine schematische perspektivische Ansicht einer Stützvorrichtung;
- Fig. 5: eine schematische perspektivische Schnittansicht einer Isolierungsvorrichtung für einen Bienenstock;
- Fig. 6: einen Innenaufbau für einen Bienenstock in einer schematischen Seitenansicht;
- Fig. 7: den Innenaufbau der Fig. 6 in einer schematischen perspektivischen Schnittdarstellung;
- Fig. 8: eine Detailansicht einer Schnittansicht eines Bienenstocks;
- Fig. 9: eine schematische Gesamtansicht eines Bienenstocks;
- Fig. 10: eine schematische Schnittansicht eines oberen Teils eines Bienenstocks;
- Fig. 11: eine schematische Schnittansicht eines unteren Teils eines Bienenstocks; und
- Fig. 12: eine schematische Schnittansicht eines oberen Teils eines Bienenstocks.

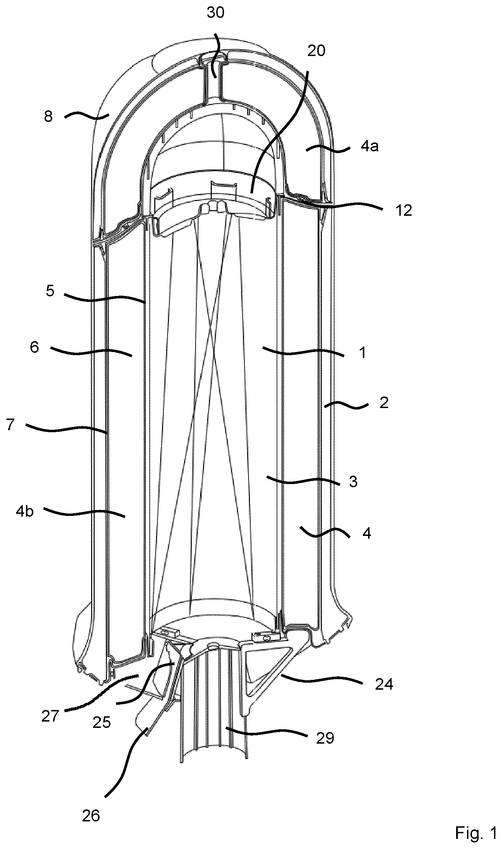

Die Fig. 1 zeigt einen Bienenstock im Querschnitt. Der Bienenstock weist einen Innenaufbau (1) auf, der in einer Stützvorrichtung (2) aufgenommen ist. Der Innenaufbau (1) dient als Behausung für ein Bienenvolk, welches in einen mit dem Innenaufbau (1) gebildeten innenliegenden Hohlraum (3) einziehen und hierin ein Wabenwerk errichten kann.

Um sicherzustellen, dass sich in dem innenliegenden Hohlraum (3) ein für ein Bienenvolk förderliches Mikroklima einstellt, ist an der Stützvorrichtung (2) eine Isoliervorrichtung (4) mit einem Schichtaufbau aufgenommen. Die Isoliervorrichtung (4) ist in der Ausführung der Fig. 1 mit drei unterschiedlichen Schichten gebildet. Eine Dampfbremsen-Schicht (5) ist aus einem dampfdiffusionshemmenden Material gebildet, bei dem es sich in der gezeigten Ausführung um eine Dampfbremsen-Folie aus Polypropylen mit einer Dampfdiffusionswiderstandszahl µ von 5.000 und einer Dicke von 0,45 mm, so dass der s_{d}-Wert der Dampfbremsen-Schicht (5) 2,3 m beträgt.

Die Dampfbremsen-Schicht ist von eine Dämmschicht (6) umgeben, welche eine Wärmedämmung des Bienenstocks bereitstellt. Die Dämmschicht (6) ist in dem Ausführungsbeispiel der Fig. 1 mit einer Schicht von Hanfwolle gebildet. Um die Dämmschicht (6) ist eine Wetterschutzschicht (7) angeordnet, die gemäß dem in der Fig. 1 gezeigten Ausführungsbeispiel aus einer Membran aus thermoplastischem Polyesterelastomer mit einem Schutz- und Deckvlies aus Polypropylen-Mikrofaser besteht. Die Wetterschutzschicht (7) ist diffusionsoffen und schlagregendicht. Beispielsweise kann die Wetterschutzschicht (7) einen s_{d}-Wert von 0,05 m aufweisen und wasserdicht bis 10.000 mm Wassersäule sein.

Die Stützvorrichtung (2) ist mit einer Stoffhülle (8) aus wasserdichtem und gegen ultraviolettes Licht beständigem Stoff überspannt, welche somit den Schichtaufbau der Isolierungsvorrichtung (4) umgibt.

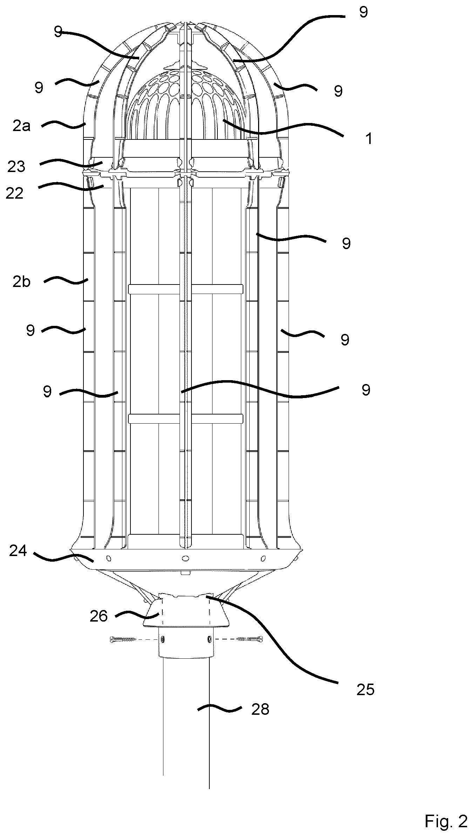

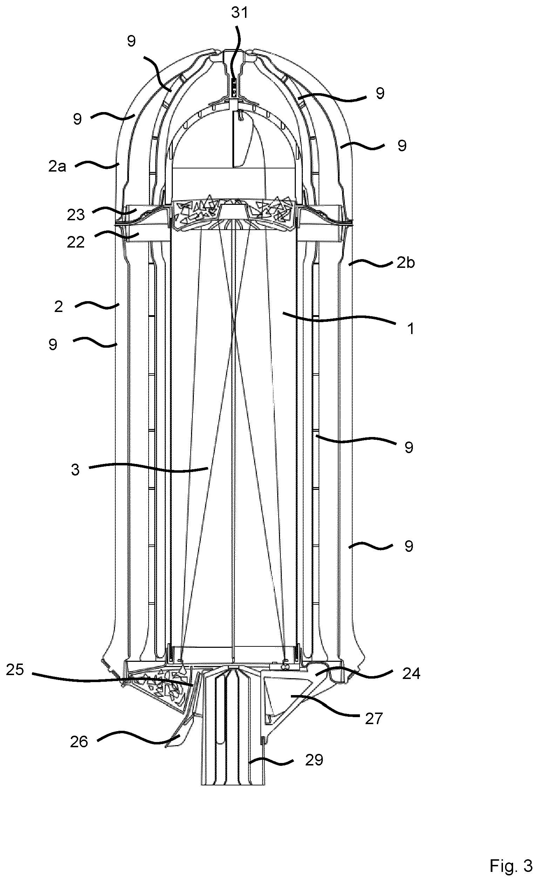

Die Fig. 2 zeigt die Stützvorrichtung (2) mit dem darin aufgenommenen Innenaufbau (1) ohne die Isolierungsvorrichtung (4) in einer Seitenansicht. Die Fig. 3 ist eine Schnittansicht der Seitenansicht gemäß der Fig. 2 der Stützvorrichtung (2) mit dem Innenaufbau (1). Wie in der Fig. 2 und der Fig. 3 erkennbar, bildet die Stützvorrichtung (2) ein Gerüst, welches aus eine Vielzahl von Stützelementen (9) zusammengesetzt ist, welche in dem gezeigten Ausführungsbeispiel Kunststoff-Spritzgussteile sind.

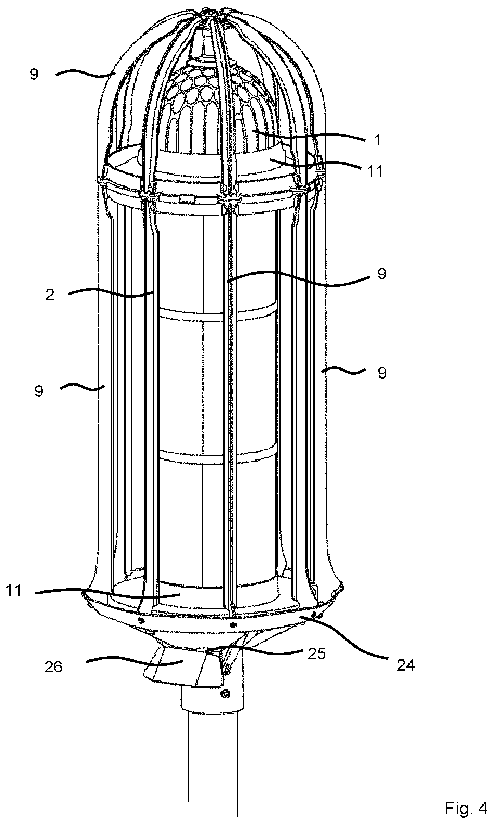

Die Fig. 4 zeigt eine perspektivische Ansicht eine offenbarungsgemäßen Stützvorrichtung (2) mit einem Innenaufbau (1).

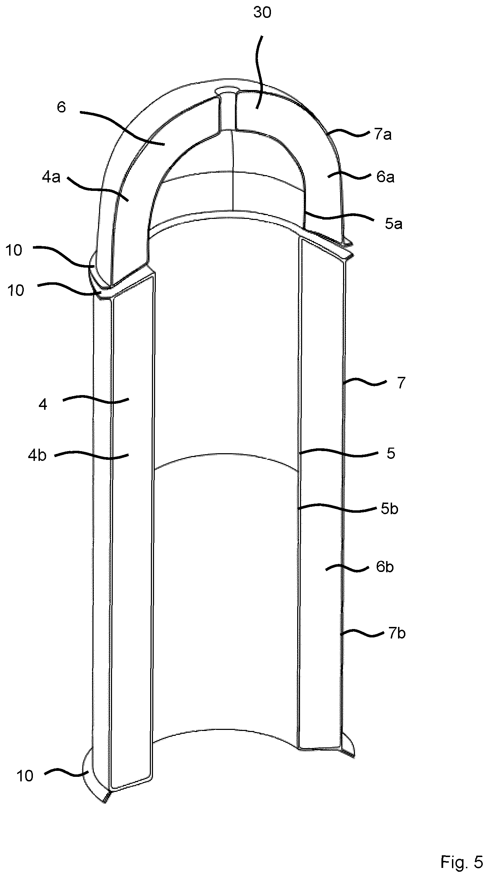

In der Fig. 5 ist perspektivisch eine Schnittansicht einer Isolierungsvorrichtung (4) für einen Bienenstock gezeigt. Die Isolierungsvorrichtung (4) ist in der gezeigten Ausführung mit zwei Abschnitten gebildet, einem oberen Abschnitt (4a) und einem unteren Abschnitt (4b). Hierbei ist die Isolierungsvorrichtung (4) mit einer Dampfbremsen-Schicht (5), einer Dämmschicht (6) und einer Wetterschutzschicht (7) gebildet, wobei der Schichtaufbau in dem oberen Abschnitt (4a) entsprechende obere Abschnitte (5a, 6a, 7a) der Schichten aufweist und in dem unteren Abschnitt (4b) entsprechende untere Abschnitte (5b, 6b, 7b) der Schichten aufweist. Hierbei sind die Dampfbremsen-Schicht (5) und die Wetterschutzschicht (7) mit Kunststofffolien gebildet, deren jeweiligen obere (5a, 7a) und untere (5b, 7b) Abschnitte so an Schweißkanten (10) miteinander verschweißt sind, dass sie den jeweiligen Abschnitt (6a, 6b) der Dämmschicht (6) umgeben.

Hierdurch sind der obere Abschnitt (4a) und der untere Abschnitt (4b) der Isolierungsvorrichtung als jeweiliger Gesamtaufbau gebildet, welcher zum Herstellen eines Bienenstocks einen Innenaufbau (1) umgebend an einer Stützvorrichtung (2) angeordnet werden können. In der Darstellung der Fig. 1 ist dies erkennbar. Hierbei sind die der obere Abschnitt (4a) und der unter Abschnitt (4b) der Isolierungsvorrichtung (4) jeweils an der Stützvorrichtung angeordnet, wodurch die einzelnen Schichten (5, 6, 7) des Schichtaufbaus der Isolierungsvorrichtung (4) an der Stützvorrichtung einander und den Innenaufbau (1) umgebend angeordnet sind.

Um die gewünschte regulierende Wirkung des Schichtaufbaus (4) auf das Mikroklima in dem innenliegenden Hohlraum (3) des Innenaufbaus (1) sicherzustellen, ist die Isolierungsvorrichtung (4) an entsprechenden als Klebeflächen ausgebildeten Haltevorrichtungen (11) der Stützvorrichtung (2) mit dieser verklebt. So ist sichergestellt, dass ein Feuchtigkeits- und Luftaustausch an diesen Stellen durch die Isolierungsvorrichtung (4) und nicht an dieser vorbei erfolgt. Zu diesem Zweck ist zusätzlich ein Dichtungsring (12) zwischen dem oberen Abschnitt (4a) und dem unteren Abschnitt (4b) der Isolierungsvorrichtung (4) angeordnet.

In einer alternativen Ausgestaltung können die Schichten (5, 6, 7) der Isolierungsvorrichtung (4) separat vorgesehen und an der Stützvorrichtung (2) angeordnet sein. Beispielsweise kann zunächst die Dampfbremsen-Schicht (5) bzw. die Abschnitte (5a, 5b) der Dampfbremsen-Schicht an der Stützvorrichtung befestigt werden, wobei die Befestigung luftdicht erfolgen kann, beispielsweise durch Verkleben der Dampfbremsen-Schicht (5) an als entsprechende Klebeflächen gebildeten Halteelementen (11) der Stützvorrichtung (2) oder mit Halteelementen (11), welche als für eine luftdichte Halterung geeignete Klemmelemente ausgebildet sind. Anschließend kann die Dämmschicht (6) bzw. deren Abschnitte (6a, 6b) um die Dampfbremsen-Schicht (5) herum an der Stützvorrichtung (2) angeordnet werden. Die Dampfbremsen-Schicht kann an der Stützvorrichtung klemmend gehalten werden. Beispielsweise können Stangen der Stützvorrichtung als Halteelemente (11) dienen, welche verhindern, dass sich die Dämmschicht (6) von der Stützvorrichtung löst. Hierbei können Strukturelemente einer mit der Stützvorrichtung (2) gebildeten Gerüststruktur gleichzeitig als Halteelemente (11) wirken. Um die Dämmschicht (6) kann die Wetterschutzschicht (7) angebracht werden, beispielsweise durch Verkleben oder Klemmen mittels entsprechender Halteelemente (11) gemäß den Ausführungen zu der Dampfbremsen-Schicht (5) oder der Dämmschicht (6).

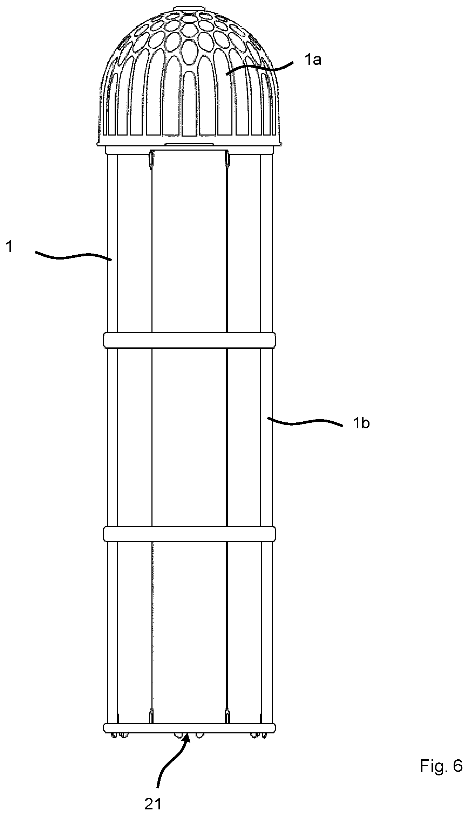

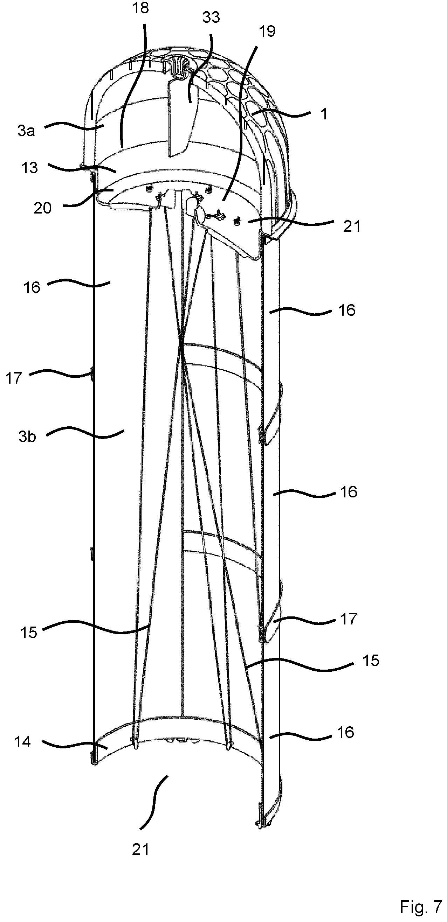

Die Fig. 6 zeigt einen Innenaufbau (1) für einen Bienenstock in einer schematischen Seitenansicht. Die Fig. 7 zeigt den Innenaufbau (1) in einer perspektivischen Schnittdarstellung. Der Innenaufbau ist einem oberen ersten Abschnitt (1a) und einem unterem zweiten Abschnitt (1b) gebildet. Hierbei definiert der erste Abschnitt (1a) einen ersten innenliegenden Hohlraum (3a) und der zweite Abschnitt (1b) definiert einen zweiten innenliegenden Hohlraum (3b), wobei der innenliegende erste Hohlraum (3a) und der innenliegende zweite Hohlraum (3b) zusammen den innenliegenden Hohlraum (3) des Innenaufbaus (1) bilden.

Wie in der Fig. 7 zu erkennen, ist der erste Abschnitt (1a) domförmig ausgebildet. Der erste Abschnitt (1a) ist in der gezeigten Ausführung aus Lehm aufgebaut, wobei auf und in eine Gerüststruktur mit einer Wabenstruktur, beispielsweise eine aus Kunststoff spritzgegossene Gerüststruktur, Lehm aufgebracht wurde, um den domförmigen ersten Abschnitt (1a) zu bilden. In einem beispielhaften Herstellungsverfahren für den domförmigen ersten Abschnitt (1a) wird eine domförmige Gerüststruktur in eine der Außenfläche der Domform der Gerüststruktur entsprechende Fertigungsform eingelegt. Anschließend wird Lehm in die Fertigungsform und somit auf und in die Gerüststruktur eingebracht. Überschüssiger Lehm wir dann mit einem Schabwerkzeug, welches in seiner Form auf die Innenfläche der Domform der Gerüststruktur angepasst ist, abgeschabt, um dem ersten Abschnitt (1a) seine Form zu geben. Nach dem Trocknen des Lehms kann dann der erste Abschnitt (1a) für den Aufbau eines Innenaufbaus (1) eines Bienenstocks dienen.

Gemäß der Darstellung der Fig. 7 ist der zweite Abschnitt (1b) des Innenaufbaus (1) röhrenförmig ausgebildet. Hierzu sind ein oberer Haltering (13) und ein unterer Haltering (14) des unteren Abschnitts (1b) mittels in Wachs getränkten Schnüren (15), welche jeweils an dem oberen (13) und dem unteren (14) Haltering befestigt sind, miteinander verspannt. Durch das Tränken in Wachs kann ein Schutz der Schnüre (15) bereitgestellt sein. Alternativ oder zusätzlich kann ein Bienenvolk durch das Tränken der Schnüre (15) in Wachs dazu angeregt werden, den innenliegenden Hohlraum (3) auszubauen. Zwischen dem oberen (13) und dem unteren (14) Haltering sind Holzplatten (16) angeordnet und verspannt, welche die Außenwand des röhrenförmigen zweiten Abschnitts (1b) bilden. Die Holzplatten (16) sind in Relation zu ihrer Flächenausdehnung dünn und können beispielsweise Furnierholzplatten sein. In einer beispielhaften Ausgestaltung haben die Holzplatten (16) eine Dicke im Bereich von 1,5 mm. Insbesondere sind die Holzplatten (16) so dünn, dass sie sich zerstörungsfrei durch Biegen der Krümmung der Außenwand des röhrenförmigen zweiten Abschnitts (1b) anpassen lassen. Gemäß dem Ausführungsbeispiel der Fig. 7 weist der zweite Abschnitt (1b) auf einem Teil seines Umfangs entlang seiner Höhe mehrere Holzplatten auf (16), welche jeweils durch Zwischenringe (17) getrennt und gehalten werden. Hierzu sind die Zwischenringe (17) mit einem H-Profil gebildet (vgl. Fig. 7), in das die Holzplatten eingelegt werden. In Umfangsabschnitten, in denen entlang der Höhe des zweiten Abschnitts (1b) nur eine Holzplatte vorgesehen ist (16), umgeben hierbei die Zwischenringe (17) diese Holzplatte lediglich, ohne sie zu teilen und zu halten, wie in der Fig. 7 auf der linken Seite erkennbar. Hierbei weisen die Zwischenringe (17) gemäß der Ausführung der Fig. 7 in Umfangsabschnitten, in denen keine Trennung von Holzplatten (16) vorgesehen sind, kein H-Profil auf. Die Verspannung mittels der Schüre (15) hält die Holzplatten (16) in den Ringen (13, 14, 17) und somit den unteren Abschnitt (1b) zusammen. Es kann vorgesehen sein, dass sich einer oder mehrere der Holzplatten (16) einzeln aus dem unteren Abschnitt (1b) entfernen lässt, um einen Zugang zu dem zweiten Hohlraum (3b) zu ermöglichen, insbesondere auch, wenn der innenliegende Hohlraum (3) von einem Bienenvolk bezogen ist. Insbesondere kann vorgesehen sein, dass in einem Segment, in dem entlang der Höhe des zweiten Abschnitts (1b) mehrere Holzplatten (16) übereinander angeordnet sind, eine, einzelne oder alle der Holzplatten (16) entfernbar sind, um einen Zugang zu dem zweiten Hohlraum (3b) zu ermöglichen. Hierzu können die Ringe (13, 14, 17) des zweiten Abschnitts (1b) mit entsprechenden Halteelementen für die Holzplatten (16) gebildet sein. Die Holzplatten (16) können als flache, also nicht der Röhrenform des unteren Abschnitts (1b) angepasste, Holzplatten (16) bereitgestellt sein, welche der Röhrenform des unteren Abschnitts (1b) erst dadurch angepasst werden, dass sie an den Ringen (13, 14, 17) des unteren Abschnitts (1b) befestigt werden, beispielsweise an diesen verklemmt werden.

Die Öffnung der Kuppel des domförmigen ersten Abschnitts (1a) bildet eine erste Abschnittsöffnung (18), welche einen Zugang zu dem ersten Hohlraum (3a) bildet. Die obere Öffnung der Röhre des zweiten Abschnitts (1b) bildet eine zweite Abschnittsöffnung (19). Durch die Überdeckung der ersten (18) und der zweiten (19) Abschnittsöffnung entsteht ein Zugang aus dem zweiten Hohlraum (3b) in den ersten (Hohlraum (3a). Dieser Zugang wird durch den Boden einer mit einer topfförmigen Ausformung des oberen Halterings (13) gebildeten Streugut-Halteeinrichtung (20) verschlossen. Hierdurch bildet der Boden der Streugut-Halteeinrichtung (20) eine Bienen-Trenneinrichtung, in deren Mitte eine Öffnung vorgesehen ist. In der Öffnung ist ein Einsatz entnehmbar angeordnet, welcher eine oder mehrere Durchtrittsöffnungen aufweist, deren Größe so gewählt ist, dass Arbeiterinnen-Bienen die eine oder mehreren Durchtrittsöffnungen passieren können und Bienenköniginnen die eine oder mehreren Durchtrittsöffnungen nicht passieren können. Auf diese Weise ist, wenn der Einsatz in der Öffnung angeordnet ist, mit dem ersten Hohlraum (3a) ein Honigraum gebildet und mit dem zweiten Hohlraum (3b) ist ein Brutraum gebildet, da die Königin eines Bienenvolkes nur in dem Brutraum Eier legen kann, da sie den Honigraum nicht durch den Einsatz, mit dem ein sogenannter Königinnen-Extruder gebildet ist, erreichen kann. Hierauf wird der Honigraum nur durch Arbeiterinnen-Bienen erreicht und durch diese zu Speicherung von Honig genutzt.

Die untere Öffnung der Röhre des zweiten Abschnitts (1b) bildet somit eine Zugangsöffnung (21), mit der ein Zugang für Bienen zu dem Hohlraum (3) des Innenaufbaus (1) bereitgestellt ist.

Die topfförmige Streugut-Halteeinrichtung (20) ist mit einem Streugut, beispielsweise Rindenmulch, gefüllt, wie beispielhaft in der Fig. 3 zu erkennen ist. Hierdurch ist Streugut-Halteeinrichtung (20) eine Abschnitt-Trenneinrichtung gebildet, da ein in dem Innenaufbau (1) lebendes Bienenvolk bei Ausbau mit Wabenwerk des zweiten Hohlraums (3b) bis an die Unterseite des Bodens der Streugut-Halteeinrichtung (20) heranbauen wird und beim Ausbau des ersten Hohlraums (3a) bis auf das in der Streugut-Halteeinrichtung (20) angeordnete Streugut bauen wird. Durch das Streugut in der Streugut-Halteeinrichtung (20) ist auf diese Weise eine Schwachstelle gebildet, an welcher sich das Wabenwerk in dem innenliegenden Hohlraum (3) auftrennen lässt. Wird der erste Abschnitt (1a) von dem zweiten Abschnitt (1b) abgehoben, werden gegebenenfalls einzelne Elemente des Streuguts mit angehoben, an welchen das Wabenwerk in dem ersten Hohlraum (3a) angebaut ist. Da die Elemente des Streuguts diesem Anheben keine oder nur eine geringe Kraft entgegensetzen, wird das Wabenwerk keiner Krafteinwirkung ausgesetzt, welche zu einer Zerstörung des Wabenwerks führen könnte. Somit ermöglicht die mit Streugut-Halteeinrichtung (20) und dem darin angeordneten Streugut gebildete Schwachstelle in dem Wabenwerk bei der Trennung des Innenaufbaus (1) in den ersten (1a) und den zweiten (1b) Abschnitt eine zerstörungsfreie Trennung des Wabenwerks gemäß einem Brutraum in dem zweiten Hohlraum (3b) und einem Honigraum in dem zweiten Hohlraum (3a).

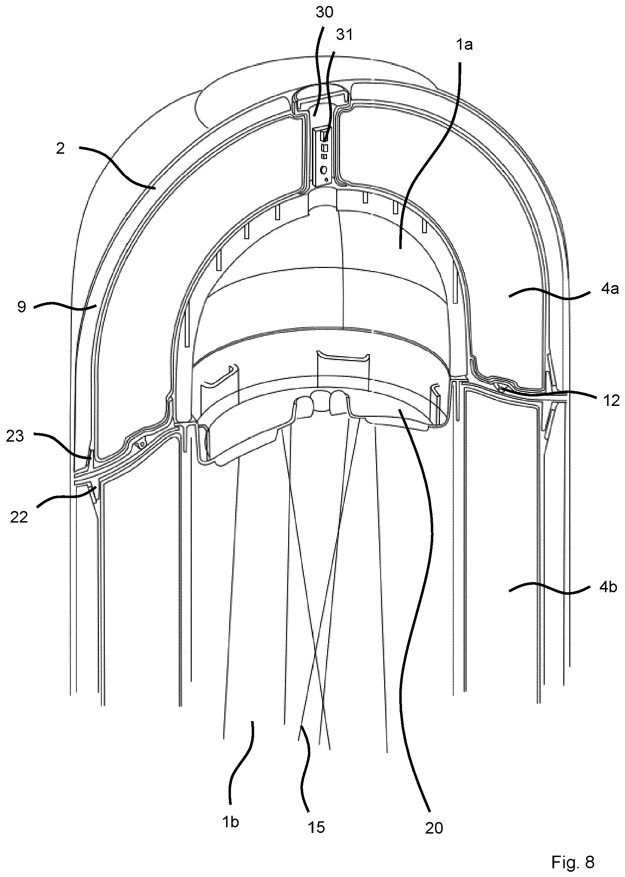

Die Fig. 8 zeigt eine Detailansicht einer Schnittansicht eines Bienenstocks mit einem Innenaufbau (1), einer Stützvorrichtung (2) und einer Isolierungsvorrichtung (4), in der ein Übergang zwischen einem ersten Abschnitt (1a) und einem zweiten Abschnitt (1b) des Innenaufbaus (1) zu erkennen ist. Hierbei ist, um ein Trennen der ersten Abschnitts (1a) von dem zweiten Abschnitt (1b) zu ermöglichen die Stützvorrichtung (2) mit der Isolierungsvorrichtung (4) trennbar ausgestaltet. Hierzu weist die Stützvorrichtung (2) einen unteren Sektionsring (22) und einen oberen Sektionsring (23) auf, an welchen die Stützvorrichtung in einen oberen ersten Abschnitt (2a) und einen unteren zweiten Abschnitt (2b) trennbar ist. Hierbei kann sich der erste Abschnitt (1a) des Innenraums (1) unabhängig von dem zweiten Abschnitt (1b) des Innenraums (1) in dem ersten Abschnitt (2a) der Stützvorrichtung (2) anordnen lassen und es kann ermöglicht sein, den zweiten Abschnitt (1b) des Innenraums (1) unabhängig von dem ersten Abschnitt (1a) des Innenraums (1) in dem zweiten Abschnitt (2b) der Stützvorrichtung (2) anzuordnen. Hierdurch kann insbesondere erreicht sein, dass sich der Innenaufbau (1) zusammen mit der Stützvorrichtung (2) und der an der Stützvorrichtung (2) angeordneten Isolierungseinrichtung (4) teilen lässt, insbesondere in einen Brutraum und einen Honigraum. Hierbei kann eine Isolierung, insbesondere ein Dichtring (12) zwischen dem unteren (22) und dem oberen (23) Sektionsring sicherstellen, dass das Mikroklima in dem innenliegenden Hohlraum (3) durch die Isolationsvorrichtung (4) bestimmt wird. Hierbei können der untere (22) und der obere (23) Sektionsring zusammen mit der Isolierung, in dem gezeigten Ausführungsbeispiel also dem Dichtring (12), die Verbindung zwischen dem ersten Abschnitt (1a) und dem zweiten Abschnitt (1b) des Innenaufbaus (1) bereitstellen.

Der untere (22) und der obere (23) Sektionsring können durch Halteelemente miteinander verbindbar sein, beispielsweise durch Clip-Verbindungselemente. Allgemein können Komponenten der Stützvorrichtung mit Clip-Verbindungselementen miteinander verbunden sein. Alternativ oder zusätzlich können andere Verbindungselemente, beispielsweise Schraubenelemente vorgesehen sein.

In dem in der Fig. 1 gezeigten Ausführungsbeispiel ist die Stützvorrichtung (2) mit einem unteren Scheibensegment (24) gebildet. Das untere Scheibensegment (24) verschließt die Zugangsöffnung (21) des Innenaufbaus (1) und weist eine wiederum eine Bienen-Zugangsöffnung (25) auf, welche in ihrer Größe darauf angepasst ist, einen Zugang für Bienen zu dem innenliegenden Hohlraum (3) zu ermöglichen. An der Bienen-Zugangsöffnung (25) ist ein Flugbrett (26) gebildet, welches einen Abflug und eine Landung von Bienen erleichtert und von den Bienen krabbelnd von der Bienen-Zugangsöffnung (25) erreichbar ist und umgekehrt.

In dem unteren Scheibensegment (24) ist zusätzlich eine Substrataufnahme (27) gebildet, in welche ein Substrat eingebracht wird, welches als Lebensraum für Symbionten von Honigbienen dient. Im linken Teil der Fig. 3 ist das Substrat in der Substrataufnahme (27) zu erkennen. Insbesondere kann so ein Lebensraum für Bücherskorpione geschaffen sein. Bei dem Substrat kann es sich beispielsweise um Rindenmulch handeln.

In einer Ausgestaltung kann die Substrataufnahme (27) entfernbar ausgestaltet sein. Hierbei kann eine Hebel zum Entsperren der Substrataufnahme vorgesehen sein, um diese anschließend zu entnehmen. Insbesondere kann so ein Einblick in den innenliegenden Hohlraum (3) ermöglicht sein, bei dem es ermöglicht ist, ein in dem Hohlraum (3) lebendes Bienenvolk zu beobachten, ohne dieses in erheblichem Ausmaß zu stören.

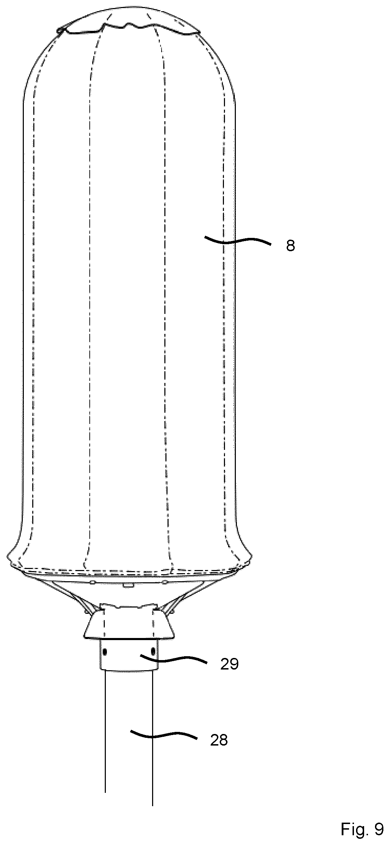

Die Fig. 9 zeigt eine schematische Gesamtansicht eines offenbarungsgemäßen Bienenstocks. Hierbei ist der Bienenstock mit einer Stoffhülle (8) überspannt, welche, wie in der Fig. 1 erkennbar ist, auf Strukturelementen der Stützvorrichtung (2) aufliegt und einen zusätzlichen Schutz vor UV-Strahlung, Hagel, Regen und anderen Witterungseinflüssen bietet.

Wie in der Fig. 9 erkennbar ist, kann der Bienenstock im Einsatz auf einem Pfahl (28) angeordnet sein. Hierzu weist der Bienenstock eine Pfahlaufnahme (29) auf, mit welcher der Bienenstock auf einen Pfahl (28) aufgesteckt werden kann. Hierdurch kann insbesondere ein flexibler Einsatz des Bienenstocks auch auf unebenem Gelände ermöglicht sein, da eine Einebnung des Untergrunds nicht notwendig ist. Stattdessen kann ein Pfahl (28) in den Boden eingebracht werden und der Bienenstock kann mit der Pfahlaufnahme (29) auf den Pfahl aufgesteckt werden. Der Bienenstock kann hierbei zusätzlich auf dem Pfahl (28) gesichert werden, beispielsweise durch Verschrauben. Dies ist beispielhaft in der Fig. 2 angedeutet. Durch ein Verschrauben kann beispielsweise ein Schutz vor Diebstahl oder Vandalismus bereitgestellt sein.

Gemäß den in den Fig. 1 und 5 gezeigten Ausführungsformen weist die Isolierungsvorrichtung eine Öffnung an der Oberseite auf, mit welcher eine Sensoraufnahme (30) gebildet ist. Die Sensoraufnahme (30) ist eingerichtet, ein Sensorarray (31) zur Überwachung des Bienenvolks in dem innenliegenden Hohlraum (3) aufzunehmen. Durch das Einbringen des Sensorarrays (31) wird die Sensoraufnahme (30) verschlossen, so dass das Mikroklima in dem innenliegenden Hohlraum (3) weiterhin durch die Schichten (5, 6, 7) des Schichtaufbaus der Isolierungsvorrichtung (4) bestimmt wird. Alternativ oder zusätzlich kann ein weitere Sensorarray (32) vorgesehen im Bereich der Pfahlaufnahme (29) vorgesehen sein. Die Sensorarrays (31, 32) können beispielsweise (Luft-)Feuchtigkeits-, Temperatur-, (Atmosphären-)Druck-, akustische, optische, Bewegungs-, Gewichts- bzw. Kraft- und/oder Kamera-Sensoren aufweisen.

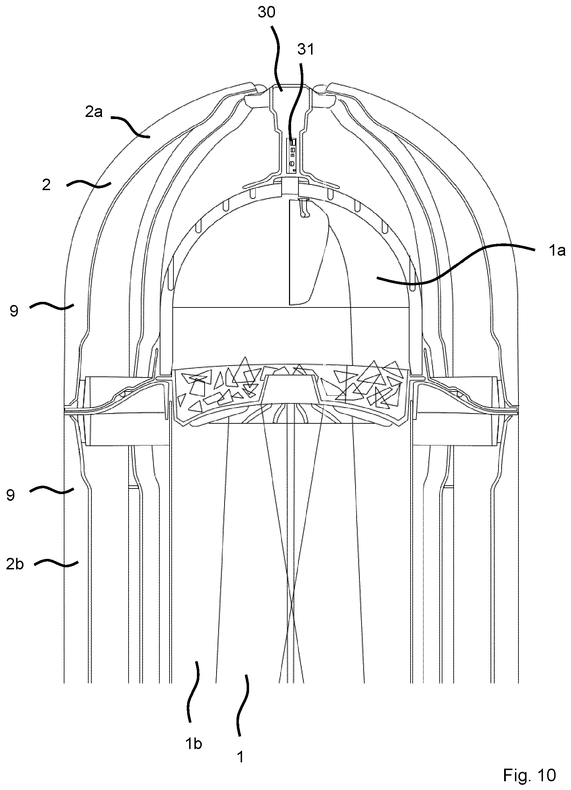

Die Fig. 10 zeigt eine Ausgestaltung mit einem in der Sensoraufnahme (30) angeordneten Sensorarray (31), welches Feuchtigkeits-, Temperatur-, Atmosphärendruck-, Mikrophon- und Bewegungs-Sensoren aufweist.

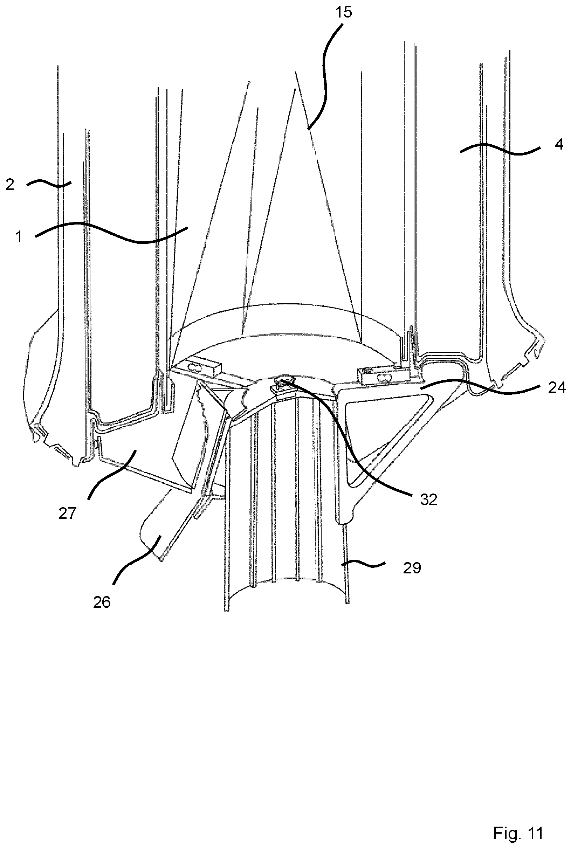

Bei der Ausgestaltung gemäß der Fig. 11 ist im Bereich der Pfahlaufnahme (20) an dem unteren Scheibensegment (24) ein Sensorarray (32) angeordnet, welches einen Gewichtssensor sowie eine Kamera umfasst.

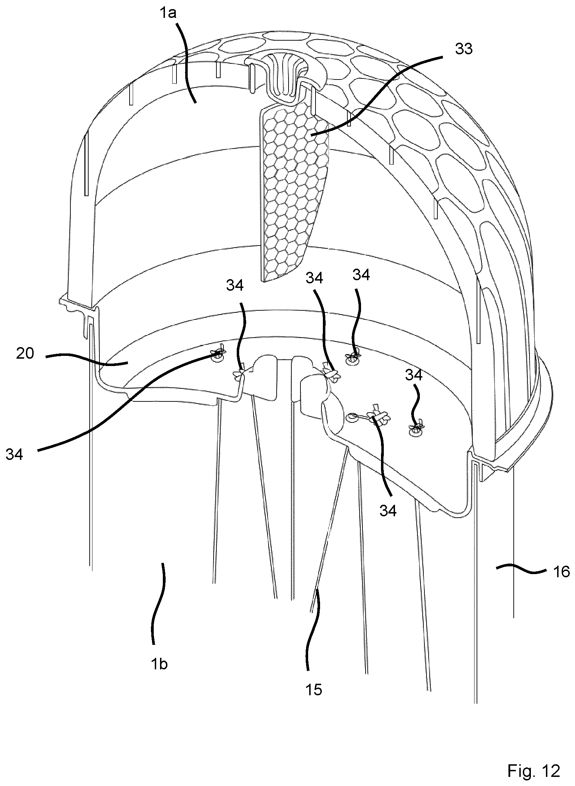

Die Fig. 12 zeigt eine Ausgestaltung, bei der in der in dem innenliegenden ersten Hohlraum (3a) eine Wachshalterung (33) angeordnet ist. Derartige Wachshalterungen sind als solches bekannt und können aus Wachsmatten bestehen, welche bei der Verwendung von bekannten Magazinbeuten in diese eingelötet werden. Durch die Wachshalterung (33) kann ein Bienenvolk angeregt werden, an die Wachshalterung (33) anschließend den innenliegenden ersten Hohlraum (3a) auszubauen. In diesem Sinne kann die Wachshalterung (33) als "Starter" oder "Vorlage" für ein Bienenvolk verstanden werden.

In der Ausgestaltung der Fig. 12 sind die in Wachs getränkte Schnüren (15) zur Befestigung an dem Boden der Streugut-Halteeinrichtung (20) mit Knoten (34) versehen.

Die in der vorstehenden Beschreibung sowie der Zeichnung offenbarten Merkmale können sowohl einzeln als auch in beliebiger Kombination für die Verwirklichung der verschiedenen Ausführungen von Bedeutung sein, im Rahmen des durch die anliegenden Ansprüche definierten Umfangs der Erfindung.

## Patentansprüche

1. Bienenstock, mit
- einem Innenaufbau (1) mit einem innenliegenden Hohlraum (3), welcher eingerichtet ist, von einem Bienenvolk bezogen und mit einem Wabenwerk ausgebaut zu werden;
- einer Stützvorrichtung (2), in welcher der Innenaufbau (1) aufgenommen ist; und
- einer Isolierungsvorrichtung (4), welche an der Stützvorrichtung (2) aufgenommen ist und einen Schichtaufbau aufweist,
wobei der Schichtaufbau Folgendes aufweist:
- eine mit einem dampfdiffusionshemmenden Material gebildete Dampfbremsen-Schicht (5), welche den Innenaufbau (1) umgebend an der Stützvorrichtung (2) angeordnet ist;
- eine mit einem wärmedämmenden Material gebildete Dämmschicht (6), welche die Dampfbremsen-Schicht (5) umgebend an der Stützvorrichtung (2) angeordnet ist; und
- eine mit einem diffusionsoffenen Material gebildete Wetterschutzschicht (7), welche die Dämmschicht (6) umgebend an der Stützvorrichtung (2) angeordnet ist.

2. Bienenstock nach Anspruch 1, wobei die Dampfbremsen-Schicht (5) eine Dampfbremsfolie ist.

3. Bienenstock nach Anspruch 1 oder 2, wobei das wärmedämmende Material feuchtigkeitsdurchlässig ist.

4. Bienenstock nach Anspruch 3, wobei das wärmedämmende Material Hanfwolle aufweist.

5. Bienenstock nach einem der vorangehenden Ansprüche, wobei das diffusionsoffene Material ein Folienmaterial ist.

6. Bienenstock nach einem der vorangehenden Ansprüche, mit einer den Schichtaufbau umgebenden Stoffhülle (8).

7. Bienenstock nach einem der vorangehenden Ansprüche, wobei
- der Innenaufbau des Bienenstocks eine Zugangsöffnung (21) aufweist, welche einen Zugang zu dem Hohlraum (3) für Bienen bildet; und
- die Dampfbremsen-Schicht (5) den Innenaufbau (1) mit Ausnahme des Zugangs luftdicht umgebend an der Stützvorrichtung (2) angeordnet ist.

8. Bienenstock nach einem der vorangehenden Ansprüche, wobei die Stützvorrichtung (2) Halteelemente (11) aufweist, mit denen eine Verbindung zwischen der Stützvorrichtung (2) und dem Schichtaufbau herstellbar ist.

9. Bienenstock nach einem der vorangehenden Ansprüche, wobei der Innenaufbau Folgendes aufweist:
- einen ersten Abschnitt (1a) mit einem innenliegenden ersten Hohlraum (3a) und einer ersten Abschnittsöffnung (18), welche einen Zugang zu dem ersten Hohlraum (3a) bildet; und
- einen zweiten Abschnitt (1b) mit einem innenliegenden zweiten Hohlraum (3b), einer zweiten Abschnittsöffnung (19) und einer Zugangsöffnung (21), welche einen Zugang für Bienen zu dem Hohlraum (3) des Innenaufbaus (1) bildet,
wobei der zweite Abschnitt (1b) trennbar luftdicht mit dem ersten Abschnitt (1a) derart verbunden ist, dass
- die erste Abschnittsöffnung (18) und die zweite Abschnittsöffnung (19) zumindest teilweise deckungsgleich sind, wodurch ein Zugang aus dem zweiten Hohlraum (3b) zu dem ersten Hohlraum (3a) durch die zweite Abschnittsöffnung (19) und die erste Abschnittsöffnung (18) gebildet ist; und
- der erste Hohlraum (3a) und der zweite Hohlraum (3b) den innenliegenden Hohlraum (3) bilden, welcher eingerichtet ist, von einem Bienenvolk bezogen und mit einem Wabenwerk im Wildbau ausgebaut zu werden,
wobei der Innenaufbau (1) weiterhin Folgendes aufweist:
- eine Abschnitt-Trenneinrichtung, welche an einem Übergang zwischen dem ersten Abschnitt (1a) und dem zweiten Abschnitt (1b) angeordnet und eingerichtet ist, an dem Übergang zwischen dem ersten Abschnitt (1a) und dem zweiten Abschnitt (1b) eine Schwachstelle in einem in dem innenliegenden Hohlraum (3) zu bildenden Wabenwerk auszubilden; und
- eine Bienen-Trenneinrichtung (20) mit einer oder mehreren Durchtrittsöffnungen, welche im Bereich der ersten Abschnittsöffnung (18) und der zweiten Abschnittsöffnung (19) derart angeordnet ist, dass ein Übergang für Bienen zwischen dem zweiten Abschnitt (1b) und dem ersten Abschnitt (1a) nur durch die eine oder mehreren Durchtrittsöffnungen ermöglicht ist, wobei die Größe der einen oder mehreren Durchtrittsöffnungen derart gewählt ist, dass Arbeiterinnen-Bienen die eine oder mehreren Durchtrittsöffnungen passieren können und Bienenköniginnen die eine oder mehreren Durchtrittsöffnungen nicht passieren können.

10. Bienenstock nach Anspruch 9, wobei die Abschnitt-Trenneinrichtung mit in einer Streugut-Halteeinrichtung (20) angeordnetem Streugut gebildet ist.

11. Bienenstock nach Anspruch 10, wobei das Streugut Rindenmulch ist.

12. Bienenstock nach einem der Ansprüche 9 bis 11, wobei
- der erste Abschnitt (1a) domförmig ausgebildet ist;
- der zweite Abschnitt (1b) röhrenförmig ausgebildet ist; und
- der erste Abschnitt (1a) über dem zweiten Abschnitt (1b) angeordnet ist.

13. Bienenstock nach einem der vorangehenden Ansprüche, wobei der Innenaufbau (1) mit wenigstens einem der folgenden Materialien gebildet ist: Lehm und Holz.

14. Verfahren zum Herstellen eines Bienenstocks, mit den Schritten:
- Bereitstellen eines Innenaufbaus (1) mit einem innenliegenden Hohlraum (3), welcher eingerichtet ist, von einem Bienenvolk bezogen und mit einem Wabenwerk ausgebaut zu werden;
- Aufnehmen des Innenaufbaus (1) in einer Stützvorrichtung (2); und
- Aufnehmen einer Isoliervorrichtung (4) mit einer Schichtanordnung an der Stützvorrichtung (2), wobei das Aufnehmen der Isoliervorrichtung (4) Folgendes umfasst:
- Umgeben des Innenaufbaus (1) mit einer mit einem dampfdiffusionshemmenden Material gebildeten Dampfbremsen-Schicht (5) der Schichtanordnung, welche an der Stützvorrichtung (2) angeordnet wird;
- Umgeben der Dampfbremsen-Schicht (5) mit einer mit einem wärmedämmenden Material gebildeten Dämmschicht (6), welche an der Stützvorrichtung (2) angeordnet wird; und
- Umgeben der Dämmschicht (6) mit einer mit einem diffusionsoffenen Material gebildeten Wetterschutzschicht (7), welche an der Stützvorrichtung (2) angeordnet wird.

## Claims

1. A beehive comprising
- an inner structure (1) having an inner cavity (3) configured to be taken from a bee population and built out with a honeycomb;
- a support device (2) in which the inner structure (1) is received; and
- an insulation device (4) which is received on the support device (2) and comprises a layer structure,
wherein the layer structure comprises:
- a vapor barrier layer (5) formed with a vapor diffusion inhibiting material, which is arranged on the support device (2) surrounding the inner structure (1);
- an insulation layer (6) formed with a heat insulating material, which is arranged on the support device (2) surrounding the vapor barrier layer (5); and
- a weather protection layer (7) formed with a diffusion-open material, which is arranged on the support device (2) surrounding the insulation layer (6).

2. The beehive according to claim 1, wherein the vapor barrier layer (5) is a vapor barrier film.

3. The beehive according to claim 1 or 2, wherein the heat insulating material is moisture permeable.

4. The beehive according to claim 3, wherein the heat insulating material comprises hemp wool.

5. The beehive according to any one of the preceding claims, wherein the diffusion-open material is a film material.

6. The beehive according to any one of the preceding claims, comprising a fabric cover (8) surrounding the layer structure.

7. The beehive according to any one of the preceding claims, wherein
- the inner structure of the beehive comprises an access opening (21) forming an access to the cavity (3) for bees; and
- the vapor barrier layer (5) is arranged on the support device (2) surrounding the inner structure (1) in an airtight manner with the exception of the access.

8. The beehive according to any one of the preceding claims, wherein the support device (2) comprises holding elements (11) by means of which a connection between the support device (2) and the layer structure can be established.

9. The beehive according to any one of the preceding claims, wherein the inner structure comprises:
- a first section (1a) having an inner first cavity (3a) and a first section opening (18) forming an access to the first cavity (3a); and
- a second section (1b) having an inner second cavity (3b), a second section opening (19) and an access opening (21) forming an access for bees to the cavity (3) of the inner structure (1),
wherein the second section (1b) is detachably connected to the first section (1a) in an airtight manner such that
- the first section opening (18) and the second section opening (19) are at least partially congruent, whereby an access from the second cavity (3b) to the first cavity (3a) is formed by the second section opening (19) and the first section opening (18); and
- the first cavity (3a) and the second cavity (3b) form the inner cavity (3) configured to be taken from a bee population and built out with a honeycomb in wild-building manner,
wherein the inner structure (1) further comprises:
- a section separation device arranged at a transition between the first section (1a) and the second section (1b) and configured to form a weak point in a honeycomb to be formed in the inner cavity (3) at the transition between the first section (1a) and the second section (1b); and
- a bee separation device (20) having one or more passage openings arranged in the region of the first section opening (18) and the second section opening (19) such that a transition for bees between the second section (1b) and the first section (1a) is only enabled by the one or more passage openings, wherein the size of the one or more passage openings is selected such that worker bees can pass through the one or more passage openings and bee queens cannot pass through the one or more passage openings.

10. The beehive according to claim 9, wherein the section separation device is formed with scattered material arranged in a scattered material holding device (20).

11. The beehive according to claim 10, wherein the scattered material is bark mulch.

12. The beehive according to any one of claims 9 to 11, wherein
- the first section (1a) is dome-shaped;
- the second section (1b) is tubular; and
- the first section (1a) is arranged above the second section (1b).

13. The beehive according to any one of the preceding claims, wherein the inner structure (1) is formed with at least one of the following materials: loam and wood.

14. A method for producing a beehive, comprising the steps of:
- providing an inner structure (1) having an inner cavity (3) configured to be taken from a bee population and to be built out with a honeycomb;
- receiving the inner structure (1) in a support device (2); and
- receiving an insulating device (4) comprising a layer arrangement on the support device (2), wherein receiving the insulating device (4) comprises:
- surrounding the inner structure (1) with a vapor barrier layer (5) of the layer arrangement formed with a vapor diffusion inhibiting material, which is arranged on the support device (2);
- surrounding the vapor barrier layer (5) with an insulation layer (6) formed with a heat insulating material, which is arranged on the support device (2); and
- surrounding the insulation layer (6) with a weather protection layer (7) formed with a diffusion-open material, which is arranged on the support device (2).

## Revendications

1. Rucher, comprenant
- une structure intérieure (1) dotée d'une cavité (3) interne, laquelle est configurée pour être occupée par un essaim d'abeilles et pour être aménagée avec un ouvrage alvéolé;
- un dispositif de soutien (2), dans lequel est réceptionnée la structure intérieure (1); et
- un dispositif d'isolation (4), lequel est réceptionné sur le dispositif de soutien (2) et comporte une structure stratifiée,
la structure stratifiée comportant ce qui suit :
- une couche pare-vapeur (5), constituée en une matière inhibant la diffusion de vapeur, laquelle en entourant la structure intérieure (1) est placée sur le dispositif de soutien (2);
- une couche d'isolation (6), constituée d'une matière isolante thermique, laquelle en entourant la couche pare-vapeur (5) est placée sur le dispositif de soutien (2); et
- une couche anti-intempéries (7), constituée d'une matière ouverte à la diffusion, laquelle en entourant la couche d'isolation (6) est placée sur le dispositif de soutien (2).

2. Rucher selon la revendication 1, la couche pare-vapeur (5) étant un film pare-vapeur.

3. Rucher selon la revendication 1 ou 2, la matière isolante thermique étant perméable à l'humidité.

4. Rucher selon la revendication 3, la matière isolante thermique comportant de la laine de chanvre.

5. Rucher selon l'une quelconque des revendications précédentes, la matière à diffusion ouverte étant une matière en film.

6. Rucher selon l'une quelconque des revendications précédentes, dotée d'une gaine en tissu (8) entourant la structure stratifiée.

7. Rucher selon l'une quelconque des revendications précédentes
- la structure intérieure du rucher comportant un ouverture d'accès (21), laquelle constitue un accès vers la cavité (3) pour des abeilles ; et
- en entourant de manière étanche à l'air la structure intérieure (1), à l'exception de l'accès, la couche pare-vapeur (5) étant placée sur le dispositif de soutien (2).

8. Rucher selon l'une quelconque des revendications précédentes, le dispositif de soutien (2) comportant des éléments de maintien (11), à l'aide desquels une liaison peut être établie entre le dispositif de soutien (2) et la structure stratifiée.

9. Rucher selon l'une quelconque des revendications précédentes, la structure intérieure comportant ce qui suit :
- une première portion (1a), dotée d'une première cavité (3a) interne et d'une premier ouverture (18) de portion, laquelle constitue un accès vers la première cavité (3a) ; et
- une deuxième portion (1b), dotée d'une deuxième cavité (3b) interne, d'une deuxième ouverture (19) de portion et d'une ouverture d'accès (21), laquelle constitue un accès pour des abeilles vers la cavité (3) de la structure intérieure (1),
la deuxième portion (1b) étant reliée de manière amovible et étanche à l'air avec la première portion (1a), de telle sorte que
- la première ouverture (18) de portion et la deuxième ouverture (19) de portion soient au moins partiellement coïncidentes, suite à quoi, un accès de la deuxième cavité (3b) vers la première cavité (3a) à travers la deuxième ouverture (19) de portion et la première ouverture (18) de portion est constitué ; et
- la première cavité (3a) et la deuxième cavité (3b) constituent la cavité (3) interne, laquelle est configurée pour être occupée par un essaim d'abeilles et pour être aménagée avec un ouvrage alvéolé en construction sauvage,
la structure intérieure (1) comportant par ailleurs ce qui suit :
- un système séparateur de portions, lequel est placé sur un passage entre la première portion (1a) et la deuxième portion (1b) et est configuré pour établir sur le passage entre la première portion (1a) et la deuxième portion (1b) une zone d'affaiblissement dans l'ouvrage alvéolé qui doit être constitué dans la cavité (3) interne ; et
- un système séparateur (20) d'abeilles, doté d'une ou de plusieurs ouvertures de passage, lesquelles sont placées dans la région de la première ouverture (18) de portion et de la deuxième ouverture (19) de portion, de sorte à ne permettre un passage pour les abeilles entre la deuxième portion (1b) et la première portion (1a) qu'à travers l'une ou les plusieurs ouvertures de passage, la taille de l'une ou des plusieurs ouvertures de passage étant sélectionnée de telle sorte que les abeilles ouvrières puissent passer l'une ou les plusieurs ouvertures de passage et que les reines des abeilles ne puissent pas passer l'une ou les plusieurs ouvertures de passage.

10. Rucher selon la revendication 9, le système séparateur de portions étant constituée de produit d'épandage placé dans un système de maintien (20) de produit d'épandage.

11. Rucher selon la revendication 10, le produit d'épandage étant du paillis d'écorces.

12. Rucher selon l'une quelconque des revendications 9 à 11,
- la première portion (1a) étant conçue en forme de dôme ;
- la deuxième portion (1b) étant conçue de forme tubulaire ; et
- la première portion (1a) étant placée au-dessus de la deuxième portion (1b).

13. Rucher selon l'une quelconque des revendications précédentes, la structure intérieure (1) étant constituée en au moins l'une des matières suivantes : de l'argile et du bois.

14. Procédé, destiné à fabriquer un rucher, comprenant les étapes consistant à :
- mettre à disposition une structure intérieure (1) dotée d'une cavité (3) interne, laquelle est configurée pour être occupée par un essaim d'abeilles et pour être aménagée avec un ouvrage alvéolé ;
- réceptionner la structure intérieure (1) dans un dispositif de soutien (2) ; et
- réceptionner un dispositif d'isolation (4) doté d'un agencement stratifié sur le dispositif de soutien (2), la réception du dispositif d'isolation (4) comprenant ce qui suit, consistant à :
- entourer la structure intérieure (1) d'une couche pare-vapeur (5) de l'agencement stratifié, qui est constituée d'une matière inhibant la diffusion de vapeur, que l'on place sur le dispositif de soutien (2) ;
- entourer la couche pare-vapeur (5) d'une couche d'isolation (6) constituée d'une matière isolante thermique, que l'on place sur le dispositif de soutien (2) ; et
- entourer la couche d'isolation (6) d'une couche anti-intempéries (7), constituée d'une matière ouverte à la diffusion, que l'on place sur le dispositif de soutien (2).
